# EUROPEAN PATENT SPECIFICATION

(11) **EP 4 209 944 B1**
(45) Date of publication and mention of the grant of the patent: **01.10.2025**
(21) Application number: 22150646.2
(22) Date of filing: 10.01.2022
(51) Int. Cl.: G06F 21/32, G06F 21/64, H04L 9/00

(54) **A USER AUTHENTICATION BASED ON A BLOCKCHAIN**
BENUTZERAUTHENTIFIZIERUNG BASIEREND AUF EINER BLOCKCHAIN
AUTHENTIFICATION D'UTILISATEUR BASÉE SUR UNE CHAÎNE DE BLOCS

(43) Date of publication of application: 12.07.2023
(73) Proprietor: Nokia Technologies Oy, 02610 Espoo (FI)
(72) Inventor: VAN DEN BROECK, Marc, Sint-Katelijne-Waver (BE); ACER, Utku Gunay, Antwerp (BE); MATHUR, Akhil, London (GB); KAWSAR, Fahim, Cambridge (GB); MIN, Chulhong, Cambridge (GB); MONTANARI, Alessandro, Cambridge (GB)
(74) Representative: Laine IP Oy

(56) References cited:
- WO-A1-2018/089098
- US-A1- 2020 065 463
- US-A1- 2020 296 091

## Description

### FIELD

Various example embodiments relate to a user authentication based on a blockchain and a method, an apparatus, a computer program and a computer program product configured to provide such.

### BACKGROUND

A digital identity has been used for long, even before the internet. Traditionally authentication method has been based on a user identifier or email address combined with a password. The internet has evolved enabling various uses and the number of users has grown. Therefore, a digital identity has become an important factor and additional authentication methods have been employed. For example, a message service, an email or a specific application may be utilized for additional authentication. Alternatively, hardware based authentications are introduced, where a specific hardware key is plugged into a user device. In case an authentication mechanism is lost, forgotten or lacking, a service or a device cannot be accessed. While complex passwords may provide safety, those pose challenges for authentication and password management.

Patent document WO2018/089098, related to biometric registration and authentication of a user based on a blockchain, is regarded as relevant prior art.

### SUMMARY

Some aspects of the invention are defined by the features of the independent claims. Some example embodiments are defined in the dependent claims.

According to a first aspect, there is provided a user apparatus for registration to a service, the user apparatus comprising:
- means for receiving, from the service, a random code,
- means for sending, to the service, the received random code and a public encryption key common to a set of apparatuses, wherein the set of apparatuses comprises the user apparatus,
- means for receiving a user identifier and a public key of the service, wherein the user identifier is encrypted using the public encryption key common to the set of apparatuses,
- means for obtaining biometric data of a user,
- means for converting the biometric data into a biometric code, which is a digital representation of the obtained biometric data of the user,
- means for creating a non-fungible token, NFT, to a blockchain, wherein the NFT comprises
   ∘ an NFT identifier,
   ∘ the biometric code encrypted using the public encryption key common to the set of apparatuses,
   ∘ an apparatus identifier of the user apparatus,
   ∘ the user identifier encrypted using public encryption key of the user apparatus, and
   ∘ an NFT owner identifier, and
- means for sending, to the service, the NFT identifier, the biometric code, the user identifier, and NFT owner identifier, wherein the NFT identifier, the biometric code, the user identifier, and the NFT owner identifier are encrypted using the public encryption key of the service.

According to a second aspect, there is provided a user apparatus for authentication of a user to access a service comprising
- means for receiving a random code and a public key of the service,
- means for obtaining a biometric data of a user of the user apparatus,
- means for converting the biometric data into a biometric code, which is a digital representation of the obtained biometric data of the user,
- means for searching from a blockchain a non-fungible token, NFT, including the biometric code encrypted using a public encryption key common to set of apparatuses, wherein the set of apparatuses comprises the user apparatus,
- means for comparing an apparatus identifier stored in the NFT, which was found to include the biometric code, with the apparatus identifier of the user apparatus,
- means for decrypting a user identifier of the NFT using private encryption key of the apparatus, if the apparatus identifier stored in the NFT is found to match with the apparatus identifier of the user apparatus, and
- means for sending the user identifier of the NFT encrypted using the received public encryption key of the service, if the apparatus identifier stored in the NFT is found to match with the apparatus identifier of the user apparatus.

The user apparatus of the aspects may comprise the encryption key pair common to the set of apparatuses and the encryption key pair unique to the apparatus.

The user apparatus of the aspects may include the biometric data comprising an unique identifier of the user. The apparatus identifier may comprise a media access control address. In addition to the NFT, the blockchain may comprise one or more additional NFT, where the NFT and the one or more additional NFT comprise the same NFT owner identifiers and the same biometric codes encrypted using the same public encryption key common to the set of apparatuses; and/or a different apparatus identifiers.

The apparatus of any of the aspects may comprise at least one processor; and at least one memory including computer program code, the at least one memory and computer program code configured to, with the at least one processor, cause, at least partly, the performance of the apparatus.

According to third aspect, there is provided a method for registration of a user to a service comprising:
- receiving, by a user apparatus, a random code from the service;,
- sending, to the service, the received random code and a public encryption key common to a set of apparatuses, wherein the set of apparatuses comprises the user apparatus,
- receiving a user identifier and a public key of the service, wherein the user identifier is encrypted using the public encryption key common to the set of apparatuses,
- obtaining biometric data of a user,
- converting the biometric data into a biometric code, which is a digital representation of the obtained biometric data,
- creating a non-fungible token, NFT, to a blockchain, wherein the NFT comprises
   ∘ an NFT identifier,
   ∘ the biometric code encrypted using the public encryption key common to the set of apparatuses,
   ∘ an apparatus identifier of the user apparatus,
   ∘ the user identifier encrypted using public encryption key of the apparatus and
   ∘ an NFT owner identifier, and
- sending the NFT identifier, the biometric code, the user identifier, and NFT owner identifier, wherein the NFT identifier, the biometric code, the user identifier, and the NFT owner identifier are encrypted using the public encryption key of the service.

According to a fourth aspect, there is provided an apparatus for registering a user to a service comprising
- means for sending a random code;
- means for receiving, from a user apparatus, the random code and a public key common to a set of apparatuses, wherein the set of apparatuses comprises the user apparatus,
- means for generating a user identifier,
- means for sending the user identifier encrypted using the public key common to the set of apparatuses, and a public encryption key of the service,
- means for receiving a non-fungible token, NFT, identifier, a biometric code, which is a representation of a biometric data, the user identifier, and the NFT owner identifier, wherein the NFT identifier, the biometric code, the user identifier, and the NFT owner identifier being encrypted using the public key of the service,
- means for creating a NFT comprising the received user identifier, the received NFT identifier, and the received biometric code, wherein the user identifier, the NFT identifier and the biometric code being encrypted using the private encryption key of the service.

According to a fifth aspect there is provided a method for registering a user to a service comprising
- sending a random code,
- receiving, from a user apparatus, the random code and a public encryption key common to a set of apparatuses, wherein the set of apparatuses comprises the user apparatus,
- providing a user identifier,
- sending the user identifier encrypted using the public encryption key common to the set of apparatuses, and a public encryption key of the service,
- receiving, from the user apparatus, an NFT identifier, the user identifier and a biometric code, which is a representation of a biometric data, the NFT identifier and the biometric code encrypted using the public key of the service,
- creating a NFT by storing the received user identifier, the received NFT identifier, and the received biometric code, all encrypted using the private encryption key of the service.

According to a sixth aspect, there is provided an apparatus for authenticating a user to a service comprising
- means for sending a random code;
- means for receiving, from a user apparatus, the random code and a public encryption key common to a set of apparatuses, wherein the set of apparatuses comprises the user apparatus,
- means for providing a user identifier,
- means for sending the user identifier encrypted using the public encryption key common to the set of apparatuses, and a public encryption key of the service,
- means for receiving an identifier of a non-fungible token, NFT, a biometric code, which is a representation of a biometric data, and in addition at least one of: a user identifier and an additional NFT identifier, all received as encrypted using the public key of the service.

According to a seventh aspect, there is provided a method for authenticating a user apparatus to a service comprising
- receiving a random code and a public key of the service,
- obtaining a biometric data of a user of the user apparatus,
- converting the biometric data into a biometric code, which is a digital representation of the obtained biometric data of the user,
- searching from a blockchain a non-fungible token, NFT, including the biometric code encrypted using public encryption key common to a set of apparatuses, wherein the set of apparatuses comprises the user apparatus,
- comparing an apparatus identifier stored in the NFT, which was found to include the biometric code, with the apparatus identifier of the user apparatus, and if the apparatus identifier stored in the NFT and the apparatus identifier of the user apparatus are found to match:
   ∘ decrypting a user identifier of the NFT using private encryption key of the apparatus, and
   ∘ sending the user identifier of the NFT encrypted using the received public encryption key of the service.

According to an eight aspect, there is provided a method for authenticating a user to a service comprising
- sending a random code,
- receiving, from a user apparatus, the random code and a public encryption key common to a set of apparatuses, wherein the set of apparatuses comprises the user apparatus,
- providing a user identifier,
- sending the user identifier encrypted using the public encryption key common to the set of apparatuses, and a public encryption key of the service,
- receiving an identifier of a non-fungible token, NFT, a biometric code, which is a representation of a biometric data, and in addition at least one of: a user identifier and an additional NFT identifier, of which all encrypted using the public encryption key of the service.

According to a seventh aspect, there is provided a computer program comprising code for, when executed in a data processing apparatus, causing an apparatus to perform, at least partly, a method in accordance with at least one of the aspects.

There is provided an apparatus comprising at least one processor, at least one memory including computer program code, the at least one memory and the computer program code being configured to, with the at least one processor, cause the apparatus at least partly to carry out features in accordance with any of the aspects or any embodiment thereof.

According to still further aspects, there are provided a computer program and a computer-readable medium, or a non-transitory computer-readable medium, configured, when executed in a data processing apparatus, to carry out at least partly features in accordance with any of the aspects or any embodiment thereof.

The invention is defined by the independent claims.

### BRIEF DESCRIPTION OF THE DRAWINGS

Some example embodiments will now be described with reference to the accompanying drawings.
FIGURE 1 illustrates an example communications system;
FIGURE 2 illustrates an apparatus in accordance with and capable of supporting at least some embodiments;
FIGURE 3 illustrates signalling in accordance with at least some example embodiments;
FIGURE 4 illustrates signalling in accordance with at least some example embodiments;
FIGURE 5 illustrates signalling in accordance with at least some example embodiments;
FIGURE 6 illustrates a method in accordance with at least some example embodiments;
FIGURE 7 illustrates a method in accordance with at least some example embodiments;
FIGURE 8 illustrates a method in accordance with at least some example embodiments; and
FIGURE 9 illustrates a method in accordance with at least some example embodiments.

The scope of protection sought for various embodiments of the invention is set out by the independent claims. The embodiments, examples, drawings and features, if any, described in the specification that do not fall under the scope of the independent claims are to be interpreted as examples useful for understanding various embodiments of the invention.

### EMBODIMENTS

A wearable device comprises sensors for recording user data, of which at least some is unique for the user. A recorded user data, comprising unique user data, is converted into digital form, and the unique user data in digital form is stored inside a non-fungible token, NFT, on the blockchain, BC.

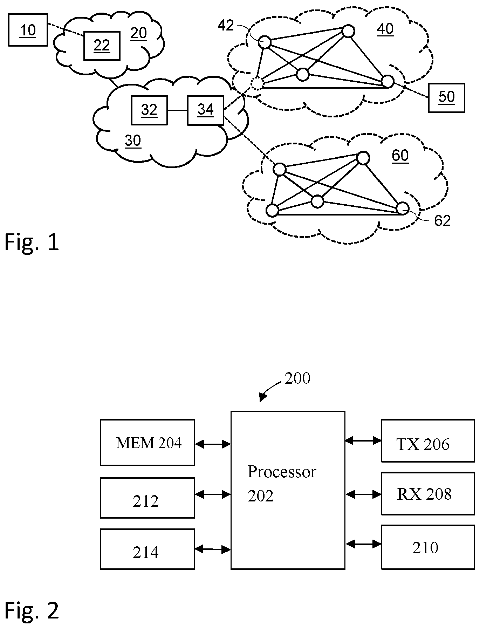

Fig. 1 illustrates a simplified example of a mobile communications system. The system comprises a mobile device, MD, 10, such as a user equipment, UE. Without limiting to Third Generation Partnership Project, 3GPP, User Equipment, the term user equipment/UE is to be understood broadly to cover various mobile/wireless terminal devices, mobile stations and devices for user communication and/or machine type or IoT communication. In some embodiments, the MD 10 is a constrained UE device, lacking some capabilities over a conventional or fully-equipped UE.

The system comprises a mobile network, which may comprise an access network, AN, 20 and a core network, CN, 30. The AN 20 may be a cellular or public land mobile network, PLMN, based access network, such as a 3GPP 5G, or another generation, access network or radio access network. The mobile device 10 may be configured to access a network node 22, such as a NodeB, evolved NodeB, eNB, Next Generation, NG, NodeB, gNB, a base station, an access point, or other suitable wireless/radio access network device or system. The access network, and the node 22 thereof, is connected to further node(s) of the network 30, such as a Next Generation core network, Evolved Packet Core, EPC, or another type of core network / network management element.

The MD 10 may be configured to connect a non-public network, NPN. The NPN may comprise a cellular or non-cellular NPN access network with access network node(s), such as an access point, AP, of an IEEE 802.11 based network or other non-3GPP access network, without however limiting to these examples. In an embodiment, the access network 20 is a NPN access network, which may be a private company network, for example. The NPN may comprise an NPN core network, which may comprise a set of appropriate core network functions. The NPN may be a standalone NPN, SNPN, i.e. operated by an NPN operator and not relying on network functions provided by a public land mobile network, PLMN, or a public network integrated NPN, i.e. a non-public network deployed with the support of a PLMN. Public network integrated NPNs can be enabled using network slicing.

The core network 30 may comprise various network functions, NFs, 32, 34. A network function in the present application may refer to an operational and/or physical entity, without limiting to 5G network functions. The network function may be a specific network node or element, or a specific function or set of functions carried out by one or more entities, such as virtual network elements or physical network nodes. Examples of such network functions include an access control or management function, mobility management or control function, session management or control function, interworking, data management or storage function, authentication function, data storage function, or a combination of one or more of these functions. In an embodiment, the NF 34 may be configured to manage mobile network data storage on the basis of mobile network data from another NF 32.

In some embodiments, the core network 30 is based on 3GPP 5G core network functions, some of which are illustrated below. In the 5G core network, user plane, UP, functions are separated from control plane, CP, functions. Access and Mobility Management Function, AMF, and Session Management Function, SMF, provide CP functions. The SMF controls one or more User Plane Functions, UPF, for handling user plane path of packet data unit, PDU, sessions for the UE. The AMF may comprise termination of radio access network CP N2 interface, registration management, connection management, reachability management, mobility management, access authentication, access authorization, Security Anchor Functionality, SEAF, Security Context Management, SCM, and support of N2 interface for non-3GPP access. Unified Data Management, UDM, is a network function storing subscriber and authentication data for the subscriber (represented by Universal Subscriber Identity Module, USIM) and may comprise support for generation of 3GPP authentication credentials, user identification handling, access authorization based on subscription data (e.g. roaming restrictions), serving network function registration, subscription management, without limiting to these functionalities.

The 5G Core advocates stateless architecture and proposes the storage of structured data in Unified Data Repository, UDR, and the unstructured data in the Unstructured Data Storage Function, UDSF. Various network functions, NFs, can store and retrieve data into/from the UDSF and the UDR as necessary over the interface between a NF and the UDSF, Nudsf, or over the interface between a NF and the UDR, Nudr. Structured data may refer to data for which the structure is defined in an associated (standard) specification, such as an appropriate 3GPP specification. Unstructured data may refer to data for which the structure is not defined in such specification.
With the introduction of 5G, more machine type communications or IoT devices connect to the mobile network. Additionally, unlike classical service provider networks, not all networks are public, but there may be various types of private enterprise networks providing services for mobile users. The communication network may comprise a non-3GPP network, for example a cable network, a network based on a wireless network protocols based on IEEE 802.11, Wi-Fi, or a Wireless Local Area Network, WLAN. Communication may include a short-region wireless communication, like ultra wide band, UWB, Zigbee or Bluetooth.

As further illustrated in Fig. 1, a blockchain, BC, based platform or network 40 may be established by a set of nodes 42. The BC network may refer to a set of nodes maintaining a BC, wherein the nodes may store a local blockchain database. The BC network 40 and the BC may be a private, permissioned BC, in which access may be restricted for nodes authorized by network owner and managed by a certification authority, CA. Certain nodes of the network 40 may be authorized to operate as validators for BC transactions. The BC network 40 may be implemented by network nodes of one or more mobile networks, such as nodes of the CN 30. For example, a network node configured to implement the network function 34, is configured to operate as a BC node and part of the BC network 40. In another embodiment, the network function 34 is connected to a network node configured to operate as a BC node.

There may be BC nodes implemented or connected by network nodes 50 of other (mobile and/or non-mobile) networks. Fig. 1 also illustrates another (second) distributed system or blockchain network 60 comprising a set of nodes 62 maintaining another (second) BC. It is to be noted that a wide variety of mobile or non-mobile devices may be configured to operate as a BC node 42, 62, such as a network node or element, a server, a wireless device, a user device, a machine-type communications, MTC, device, or other type of computing device.

Blockchain is generally a decentralized and distributed ledger technology that uses algorithms and strong encryption to record digital transactions or data in a transparent, secure, and anonymous way. Transactions or data are stored into blocks, which cannot be altered without alteration of all subsequent blocks. Blocks include a cryptographic hash of a prior block in the blockchain, and thereby linked blocks from a chain. Integrity of a block and the data contained in it may be assured by digital signature of the block. Blocks are time stamped, and various time stamping schemes may be utilized. Application of blockchain technology enables a way to track the unique history of transactions by individual nodes in the network. Blockchain transactions secured by strong cryptography are exchanged and validated in order to reach consensus for resource ownership. Blockchain security may utilize public-private key pairs for cryptography. A public key may be an address on the blockchain. Value tokens, which may be sent across network, may be recorded as belonging to the address. A private key may provide access to the digital assets of a blockchain.

Internet has evolved with mobile access, social applications and cloud services to web 2.0, and going towards decentralized peer-to-peer trading. Web 3.0 concentrates on edge computing, decentralized data networks and artificial intelligence. Users and machines may interact with data, value and counterparties via peer-to-peer networks. Development is towards human centric, privacy preserving computing. Decentralization of even stored data rises need for authentication using publicly available data. However, traditional use of identifier and password may not be practical or sufficient.

There is provided a way to authenticate a user by utilizing a blockchain technology. A digital identifier is stored inside a non-fungible token, which represents a unique digital item. A digital identifier of a user is based on a unique biometric identifier of the user, captured by a user device. A digital identifier may be captured and/or recorded via sensors of a user device.

There is provided an authentication mechanism, which employs a non-fungible token, NFT, to which a digital identifier has been stored. The digital identifier may be based on a sensed user-specific data.

Distributed databases, not requiring a third party control, being stored in a distributed way by everyone in the network, enable providing by definition immutable blockchains. There are many different use cases and protocols for using blockchains, one of which is called a non-fungible token, NFT. A NFT corresponds to a unit of data on a digital ledger, where the NFT represents a unique and non-interchangeable digital item. NFTs may represent digital files, such as art, photos, audio, videos, video game items or other forms of creative work. NFT comprises a token id, which is unique for a token, and an owner of a blockchain account that owns the token. In blockchain NFTs represents a unique and non-interchangeable assets. An NFT allows representing assets by the unique identifier, as a possession of the owner. Blockchain technology enables establishing verified and public proof of ownership of the digital items. A NFT may be associated with a particular digital or physical asset and a license to use the asset for a specified purpose. NFTs and the associated licenses are tradeable. NFTs may be tracked on their underlying blockchains in order to provide buyers with a proof of ownership. A specific standards, ERC-721, and blockchains, like Ethereum, FLOW, Tezos and Solana, have been established for NFT blockchain technology. NFT blockchain technology enables to ensure that the digital item represented is authentically one of a kind, that is, unique.

Fig. 2 illustrates an apparatus in accordance with and capable of supporting at least some embodiments. An apparatus may comprise a smart device capable of sensing information of the user. An apparatus may be a wearable device, or a device integrated or attached to a wearable item, device or cloth, for example. The apparatus may comprise a smartphone, a tablet, a phablet, smart earbuds, a smartwatch, a smart ring or a sensor node, for example. The apparatus may comprise a device capable of gathering information of the user, for example the user wearing the device. The apparatus may be capable of connecting to other devices or networks via different wireless protocols. The apparatus may comprise electronic circuitries for realizing at least some embodiments. In another embodiment, the apparatus carrying out the above-described functionalities is comprised in such a device, e.g. the apparatus may comprise a circuitry, such as a chip, a chipset, a microcontroller, or a combination of such circuitries in any one of the above-described devices.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Fig. 2 illustrates an example apparatus capable of supporting at least some embodiments. Illustrated is a device 200, which may include one or more controllers configured to perform operations in accordance with at least some of the embodiments. Comprised in the device 200 is a processor 202, which may comprise, for example, a single- or multi-core processor wherein a single-core processor comprises one processing core and a multi-core processor comprises more than one processing core. The processor 202 may comprise more than one processor unit. The processor may comprise at least one application-specific integrated circuit, ASIC. The processor may comprise at least one field-programmable gate array, FPGA. The processor may be means for performing method steps in the device. The processor may be configured, at least in part by computer instructions, to perform actions.

The device 200 may comprise at least one memory 204. The memory may comprise random-access memory and/or permanent memory. The memory may comprise at least one RAM chip. The memory may comprise solid-state, magnetic, optical and/or holographic memory, for example. The memory may be at least in part comprised in the processor 202. The memory 204 may be means for storing information. The memory may comprise computer instructions that the processor is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The memory may be at least in part external to the device 200 but accessible to the device. For example, input parameters and control parameters affecting operations related to blockchain operations may be stored in one or more portions of the memory and used to control operation of the apparatus.

The device 200 may comprise a transmitter TX 206. The device may comprise a receiver RX 208. The transmitter and the receiver may be configured to transmit and receive, respectively, information in accordance with at least one cellular or non-cellular standard. The transmitter may comprise more than one transmitter. The receiver may comprise more than one receiver. The transmitter and/or receiver may be configured to operate in accordance with global system for mobile communication, GSM, wideband code division multiple access, WCDMA, long term evolution, LTE, 3GPP new radio access technology (N-RAT), IS-95, wireless local area network, WLAN, and/or Ethernet standards, for example. The device 200 may comprise a further transceiver 210, such as near-field communication, NFC, transceiver.

The device 200 may comprise a user interface, UI. The UI may comprise at least one of a display, a keyboard, a touchscreen, a speaker and a microphone. A user may be able to operate the device via the UI, for example to view and manage data, such as the mobile network data, stored in the memory 204 or on another device accessible via the transmitter 206 and the receiver 208, detect a state, an alarm or another condition of the device or connected system, and/or to configure parameters and/or features of the device.

The device 200 may comprise or be arranged to receive a removable (memory) module 214. The module may comprise, for example, a removable memory module or a cryptographic module installable in the device 200. For example, the module 214 may comprise cryptographic information for authentication and/or encryption of communicated information.

The processor 202 may be furnished with a transmitter arranged to output information from the processor, via electrical leads internal to the device 200, to other devices comprised in the device. Such a transmitter may comprise a serial bus transmitter arranged to, for example, output information via at least one electrical lead to memory 204 for storage therein. Alternatively to a serial bus, the transmitter may comprise a parallel bus transmitter. Likewise the processor may comprise a receiver arranged to receive information in the processor, via electrical leads internal to the device 200, from other devices comprised in the device 200. Such a receiver may comprise a serial bus receiver arranged to, for example, receive information via at least one electrical lead from the receiver 208 for processing in the processor. Alternatively to a serial bus, the receiver may comprise a parallel bus receiver.

The device 200 may comprise a module configured to establish a position data of the device 200. The module may be a global positioning system GPS module. The device 200 may comprise a camera 212. The camera 212 may enable capturing 2D images, 3D images and/or video images. The device 200 may comprise further devices not illustrated in Fig. 2. For example, some devices may include a further transceiver, a display/UI, and/or an identity module. In some embodiments, the device lacks at least one device described above. In addition, the device 200 may comprise one or more sensors for environmental sensing. Alternatively or in addition to the camera 212, the device may comprise at least one or more of: a scanner, an infrared sensor, a voice recognition, a face recognition, a pulse sensor, an electrocardiogram, ECG, an electroencephalogram, EEG, an image sensor, a sound detection sensor and a microphone.

The processor 202, the memory 204, the transmitter 206, the receiver 208, the sensors, as well as other modules, may be interconnected by electrical leads internal to the device 200 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

A biometric identifier may be utilized for authentication of a user. Biometric identifiers may be based on physiological or behavioural identifiers or measurements. Physiological identifiers or measurements may be based on capturing data on a face, a fingerprint, an eye, voice, an external ear, an ear canal, ECG, EEG, or vein pattern, for example. Behavioural measurements may comprise voice recognition, signature or keystroke dynamics, gestures, gait, walk analysis, and so on. Physiological measurements may be seen stable throughout life of a user, thus providing higher reliability compared to behavioural measurement. In addition to morphological identifiers, physiological measurements may include biological analyses on DNA, blood, saliva or urine, for example. Authentication using biometric data provides level of security and accuracy. In contrast to passwords, badges or documents, biometric data is not as vulnerable to be forgotten, exchanged, stolen or forged.

A smart electric device may be used to get a biometric identifier of a user. The smart electric device comprises an electric device with microcontrollers. The smart electric device may comprise wearable device, like a smart wear, skin electronics, a digital textile, an E-textile, smart clothes, smart underwear, smart shoes, smart jewellery, wristband, eyewear, glasses, or other. The wearable device may comprise epidermal electronics and/or wear close or on the surface of the skin. A biometric identifier may be detected and/or recorded by a sensor, like a scanner. For iris scan, a camera may be used for retinal/iris scan and an infrared may be used for detecting the shape of the iris. Facial recognition may comprise a camera or a scanner, and a software for analysis. Similarly, speech recognition may be based on detected voice via a sensor, like a microphone, which is then analysed. A fingerprint or an external ear may be scanned. In many wearable devices, heart rate is measured via a pulse sensor. In addition, an electrocardiograph, ECG, and/or an electroencephalograph, EEG, may be measured and provide biometric information on a heart rate or a brainwave, correspondingly. Smart and/or wearable devices or sensors/sensor nodes may be equipped with an analyser capable of making biological analysis, for example on saliva of a user. Sensor devices enable authentication of users on different platforms.

In this application encryption key pairs are illustrated for protecting data. Encryption keys enable protecting data from others but the selected, trusted parties/receivers. In addition, or alternatively, other suitable encryption mechanisms may be utilized, like an end-to-end encryption or point-to-point encryption.

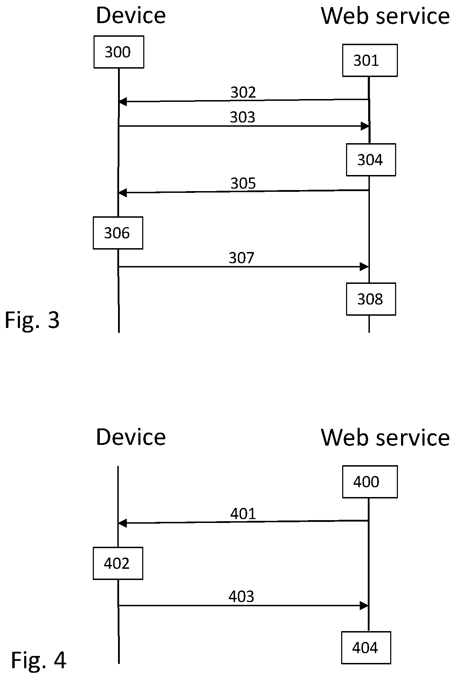

Figure 3 illustrates signalling in accordance with at least some example embodiments. The signalling of Figure 3 shows a registration process, where a user of a wearable device is configured to start accessing a web service, where authentication is required. On the left side of Fig. 3 there is a device, and on the right side a web service is shown. In this example, the device comprises smart earbuds. The earbuds may be connected to a mobile device.

At phase 300, the earbuds comprise an earbuds identifier, for example a unique media access control, MAC, address, *MAC001,* and the earbuds are configured with two pairs of encryption keys. A first encryption key pair comprises a public key common to a set of apparatuses, Pub-Key-E, and a private key common to the set of apparatuses, Priv-Key-E. The set of apparatuses, which share the first encryption key pair, comprise the earbuds. The first encryption key pair may be shared by all earbuds of the manufacturer, or by one type/kind/model of earbuds, or all devices of a brand, for example. The second encryption key pair comprises the earbuds specific public key, Pub-Key-U, and the earbuds specific private key, Priv-Key-U. The second encryption key is unique to the earbuds. The user of the earbuds wants to start use of a web service, so the earbuds are configured to indicate desire to register to the web service. This may be implemented via a mobile device to which the earbuds have been connected. The earbuds are capable of authentication for the web service. The earbuds may be configured to receive data wirelessly, for example via Wi-Fi or Bluetooth. The earbuds may be receive and/or send data via a mobile device. The mobile device and the earbuds may be connected via a wired or a wireless connection, for example a local connection. The mobile device may also be connected to a network.

At phase 301, the web service is configured with an encryption key pair including the web service public key, Pub-Key-S, and the web service private key, Priv-Key-S. The web service may be configured to detect an available device or a device, which desires to access the service. The web service may be configured to search for devices. For example, certain kind or type of devices, capable of utilizing the web service, may be searched. Search may be implemented via wireless communication method. The web service may detect a mobile device to which the earbuds are connected.

At phase 302, the web service is configured to transmit a request to pair. The request to pair comprises a random code, which is generated randomly. The request is sent to the earbuds, optionally via the mobile device connected to the earbuds. The request is sent in response to detecting available earbuds capable of authentication and/or accessing the web service, optionally via a mobile device. The request may be sent via a network connection, for example via a cellular communication network. The earbuds and the mobile device may be connected via a short distance connection, for example Wi-Fi or Bluetooth. In this embodiment, the random code is *CODE456.*

At phase 303, in response to receiving the request to pair including the random code, *CODE456,* the earbuds transmit, optionally via a mobile device, the random code, *CODE456* and the public key common to the set of apparatuses, Pub-Key-E. The random code and the public key are transmitted to the web service. The web service is informed of the aim of the earbuds to register, by the received random code and the public key.

At phase 304, the web service is configured to generate a random user identifier, user id, *USERXYZ001.* The generated user id will be used for the account of the user of the earbuds. The user id is encrypted with the received public key common to the set of apparatuses, Pub-Key-E.

At phase 305, the web service is configured to send the user identifier encrypted with the public key common to the set of apparatuses, Pub-Key-E[*USERXYZ001*], and the public encryption key of the web service, Pub-Key-S. The encrypted user id and the Pub-Key-S are sent to the earbuds, optionally via a mobile device.

At phase 306, in response to receiving the encrypted user id and the Pub-Key-S, optionally via a mobile device, the earbuds are configured to scan ear canal of the user. The scan provides a biometric identifier, which uniquely identifies the user. The biometric identifier is converted into digital form, like a digital code, *SCAN123.* The mobile device may be configured to convert the biometric identifier into digital form.

The user device, comprising the earbuds connected to teh mobile device, are configured to create an NFT for the user, the earbuds and the web service. The NFT comprises a unique blockchain token identifier, token id, which is *token001.* The NFT comprises the digital code, *SCAN123,* which is based on the biometric identifier scanned from the user's ear canal. The digital code, *SCAN123,* is encrypted using the public key common to the set of apparatuses, which comprises the earbuds, Pub-Key-E. The NFT comprises the identifier of the earbuds, which may be the MAC address of the earbuds, *MAC001.* The NFT comprises user id of *USERXYZ001,* which has been generated by the web service. The user id received form the web service is encrypted by the user device using the public key unique of the earbuds, Pub-Key-U. As NFTs comprise ownership data, which enables identifying a rightful owner of the NFT, an owner identifier, owner id, is stored in the NFT. In this embodiment the NFT comprises fields of: a TokenID, or a NFT id, containing the unique token identifier; a SCAN containing the encrypted digital code based on the scan of user's ear canal; a MACADDRESS containing the MAC address of the earbuds; a USER containing the encrypted user identifier; and a NFTOWNER containing the owner identifier of the NFT.

At phase 307, after the NFT has been created, the user id, *USERXYZ001;* the NFT id, *token001;* the NFT owner id of the token; and *SCAN123,* which represents the scanned biometric data, are configured to be sent to the web service. Before sending, the data is encrypted using a public key of the service, Pub-Key-S. The created NFT is configured to be registered with the web service.

In case the same user is owner of other NFTs, the user may register the other NFTs with the web service. The owner information is stored as an owner identifier, OWNERID, in the NFTOWNER field of the NFT. For example, an array of other NFTs, which include the same owner identifier, i.e. which are owned by the user, may be added to the data being transmitted to the web service. The array may comprise one or more NFTs. The array is encrypted using a public key of the service, Pub-Key-S, before it is sent to the web service with other data, at phase 307. Here the user has a pair of sneakers, for which a NFT has been created with a NFT id or token id, *token987.* This second NFT is registered to the web service by adding the NFT token id to the data to be encrypted and to be send to the web service. As the earbuds, the sneakers here are connected to the mobile device via a local wireless connection.

The web service is configured to receive data from the user device. The received data comprises, based on the NFT created by the user device, the user id, *USERXYZ001,* the NFT id, *token001;* the owner id of the token; and *SCAN123* representing the scanned biometric data. The received data may comprise array of one or more other NFT identifiers or token identifiers, which NFTs have the same owner identifer. The received data has been encrypted using a public key of the service, Pub-Key-S. The service is able to decrypt the received data using the private encryption key of the service, Priv-Key-S.

At phase 308, the web service is configured to create an NFT. The NFT created by the web service comprises a token id, *token002.* The NFT identifier, *token002,* is unique for the created NFT. The NFT stores fields of the user id, *USERXYZ001,* the earbuds token, *token001, SCAN123,* and an array of NFTs, which in this case comprises *token987.* The user may send additional NFTs for enabling additional or alternative authentication. The array of NFTs may comprise one or more tokens. Here the NFT of the web service, *token002,* is configured to store in the field of a NFTLIST containing one or more additional NFT(s), here the received *token987,* which is an additional or the second token received from the same user. In other words, the received NFTs, *token001* and *token 987,* include the same owner identifier in their NFTOWNER field. The fields of the created NFT have been encrypted with the public key of the web service, Pub-key-S. In addition, the NFT may be configured to store owner identifier of the NFT. Fig. 3 illustrated, by way of an example, registering a device to a web service. After the registration has been successfully completed, the NFT created by the user device, like earbuds optionally connected to a mobile device, comprises:
- TokenID: *token001*
- SCAN: Pub-Key-E[*SCAN123*]
- MACADDRESS: *MAC001*
- USER: Pub-Key-U[*USERXYZ001*]
- NFTOWNER: OWNERID

The same user may own one or more NFTs. In Fig. 3, the second NFT of the same user comprises
- TokenID: token987
- NFTOWNER: OWNERID

After the registration of Fig. 3 has been successfully completed, the NFT created by the web service comprises:
- TokenID: *token002*
- USER: Pub-Key-S[*USERXYZ001*]
- TOKEN: Pub-Key-S[*token001*]
- SCAN: Pub-Key-S[*SCAN123*]
- NFTLIST: Pub-Key-S[*token987,...*]

The NFTs created for the user device and for the service side may be at the same or at a different blockchain. A blockchain may be private. A blockchain may be non-private, since data is encrypted. A NFT may be created by a user apparatus, like a mobile device, or by an accessory connected to the mobile device via the mobile device. As long as NFT data is correct, the user of the user device as identifier (earbuds in Fig. 3) may be authenticated. The user apparatus or integral parts, blocks or functions of it, may utilize biometric authentication utilizing a NFT, as illustrated in this application.

After the registration has been completed successfully, the user may use the web service. Authentication may be implemented via the user device, using the created NFTs. Fig. 3 is illustrating wearable earbuds, optionally connected to a mobile device, as a user device. The wearable earbuds, with or without a mobile device, may be replaced by any other device, sensor, means or arrangement capable of capturing and/or recording a biometric identifier of a user.

Figure 4 illustrates signalling in accordance with at least some example embodiments. The signalling of Figure 4 shows an authentication process, where a user of a wearable device is configured to start use of a web service, where authentication is required. On the left side of Fig. 4 there is a user device, and on the right side a web service is shown. The user device may be smart earbuds, optionally connected to a mobile device. As in Fig. 3, the user device comprise or is configured with an encryption key pair, which is common to a set or apparatuses, comprising a public key, Pub-Key-E, and a private key, Priv-Key-E, and an encryption key pair specific to the user device, Pub-Key-U, Priv-Key-U. The set of apparatuses comprise the user device. The set of apparatuses may comprise multiple devices of the same or similar kind, type, brand, model, manufacturer, provider, subscriber, or alike. The web service comprises an encryption key pair, Pub-Key-S, Priv-Key-S. The user activates the user device, and the user device may be detected by the web service, for example as a cellular communication device. The web service may continuously search for devices capable of accessing it.

At phase 400, the web service is configured to generate a random code, like *XYX987.* The random code is sent to the user device with the public key of the web service, Pub-Key-S, at phase 401.

The random code, *XYX987,* and the public key of the web service, Pub-Key-S, are received at the user device. At phase 402, the user device or the earbuds areconfigured to perform a scan of the user's ear canal. The resulting biometric scan is formulated in digital form, resulting to a digital code *SCAN123.* The user device is configured to search from the blockchain for a block that includes *SCAN123.* The NFT field SCAN may be detected and its content may be analysed. Alternatively, number of fields may be searched for *SCAN123,* without directing the search to any specific NFT field. The SCAN field content has been encrypted using public key common to a set of apparatuses, Pub-Key-E[S*CAN123*]. The set of apparatuses comprise the earbuds. The earbuds or the user device hold the private key of the earbuds manufacturer, Priv-Key-E. The user device is configured to decrypt the SCAN field. In this case, the match is found from the SCAN field content, as decrypted. The searched scan, *SCAN123,* is found from the NFT having tokenID of *token001.* The user device is configured to check, whether the apparatus identifier in the NFT corresponds to the apparatus identifier of the earbuds. The apparatus identifier may correspond to a media access control, MAC, address of the earbuds. If the apparatus identifiers are found to match, it is considered that the user of the earbuds is the owner of the earbuds, and the owner is performing authentication to the web service using their own earbuds. The user device is configured to decrypt the USER field of the NFT, containing user identifier, *USERXYZ001,* which is stored as encrypted using the public key, which is unique for the earbuds, being Pub-Key-U[*USERXYZ001*]*.* The user device is configured to decrypt the field USER using the unique private key of the earbuds, Priv-Key-U. The user device is configured to encrypt the decrypted USER field, *USERXYZ001,* using the public key of the web service, Pub-Key-S.

At phase 403, the encrypted USER field, Pub-Key-S[*USERXYZ001*], is sent to the web service. In case the user has stored one or more additional NFT, the such may be transmitted with the encrypted USER field, Pub-Key-S[*USERXYZ001*] to the web service. All transmitted NFTs or fields are encrypted by the earbuds, optionally via the mobile device, using the public key of the web service, Pub-Key-S. One or more additional NFTs enable performing additional or alternative authentication, and/or increasing strength of the authentication.

A phase 404, the web service has received the USER field, as transmitted by the user device. The web service is configured to decrypt the received USER field, Pub-Key-S[*USERXYZ001*], using the private key of the web service, Priv-Key-S. Based on the decrypted USER field, *USERXYZ001,* the web service is configured to search into the blockchain in order to find the NFT that includes the same in the USER field. The web service is configured to detect the NFT having token id of *token002,* which includes the searched USER field, *USERXYZ001.* Based on the found USER field data that corresponds to the received one, the web service is configured to decide that the user has been successfully authenticated to the web service. The web service is configured to give access to the user, after the successful authentication at phase 404.

In the context of this application a key or a key pair refers to an encryption key or an encryption key pair. The key pairs are used for cryptography and encryption function. Only parties or entities having access to the encryption key pair can access the encrypted data. In each phase, encrypted data is decrypted, using the corresponding key pair, before data is accessed, processed, searched, analysed or compared.

The NFT of the web service may comprise an array comprising one or more other NFTs of the same user. The array of one or more other NFTs is stored as a list in an NFT filed called NFTLIST. Similarly to other fields of the NFT of the web service, the NFTLIST is encrypted using public key of the web service, Pub-Key-S. The web service may be configured to check the NFTLIST, whether an array of possible additional NFTs is stored to for the same user, having the same USER id, *USERXYZ001.* In case one or more additional NFT, which has been received from the same earbuds or user device, corresponds to one of the entries in the NFTLIST, this strengthens the authentication or a signal that the user is the one they claim to be. This enables rising level of security for the web service. For example, access or unlocking applications, features or services without successful authentication may be avoided.

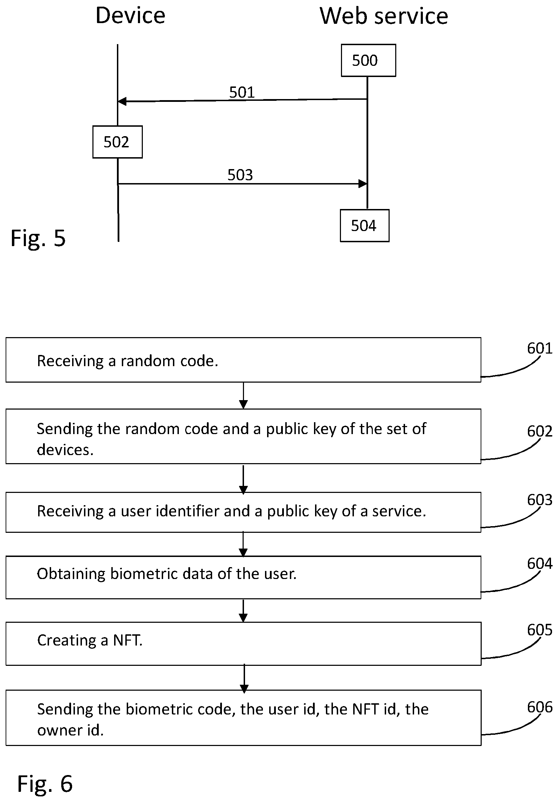

Figure 5 illustrates signalling in accordance with at least some example embodiments. The signalling of Figure 5 shows an authentication process, where a user of a wearable device is configured to start use of a web service, where authentication is required. On the left side of Fig. 5 there is a user device, and on the right side a web service. In this example, the user device comprises smart earbuds. However, the user device may comprise any wearable device alone, in accompanied with a mobile device, to which the wearable device is connected. As in Fig. 3, the earbuds are configured with an encryption key pair common to a set of apparatuses comprising a public key, Pub-Key-E, and a private key, Priv-Key-E, and an encryption key pair specific to the earbuds, Pub-Key-U, Priv-Key-U. The set of apparatuses comprises the earbuds. The web service comprises an encryption key pair, Pub-Key-S, Priv-Key-S. The user activates the earbuds, and the earbuds may be detected, optionally via the mobile device, by the web service. The web service may be configured to search for devices.

At phase 500, the web service is configured to generate a random code, like *XYX987.* The random code is sent to the user device with the public key of the web service, Pub-Key-S, at phase 501. This corresponds to the phases 400-401 of Fig. 4.

The random code, *XYX987,* and the public key of the web service, Pub-Key-S, are received at the user device comprising the earbuds. In response, at phase 502, the earbuds are configured to perform a scan of the user's ear canal resulting to a biometric scan. The biometric scan is formed in digital form, resulting to a digital code *SCAN123.* The user device is configured to search from the blockchain for a block that includes *SCAN123.* The NFT field SCAN has been encrypted using a public key common to a set of apparatuses, which set comprises the earbuds, Pub-Key-E[*SCAN123*]. The user device is configured to decrypt the field SCAN using the private key common to the set of apparatuses, Priv-Key-E[*SCAN123*]. The decrypted *SCAN123* is found to match the searched digital code. The matching digital code is found from NFT having token id of *token001.*

Next, the user device is configured to check an apparatus identifier of the NFT *token001.* The apparatus identifier may be a MAC address. At this phase, different from the Fig. 4, the user device may detect that the apparatus identifier of the NFT *token001* is not matching with the apparatus identifier of the earbuds currently used. This may happen, if the user uses earbuds, which are not owned by him/her, but are for example borrowed or for public use. In this example, the earbuds not owned by the user are shown in Fig. 5, and the earbuds owned by the user are shown in Fig. 4. Earbuds of Fig. 4 and 5 are both comprised in the set of apparatuses, thus the earbuds are both configured with access to the key pair common to the set of apparatuses, Pub-Priv-Key-E. The information in the USER field of the NFT *token001* cannot be decrypted by the user device with the currently used earbuds, because the USER field has been encrypted using the earbuds specific public key, Pub-Key-U of different earbuds than currently used. The USER filed has been encrypted using specific key of - not the borrowed earbuds now used (Fig. 5), but the ones owned (Fig. 4). The USER field of the NFT may be decrypted with the earbuds specific private key, Priv-Key-U, of the earbuds owned by the user (Fig. 4). The different, not owned earbuds (Fig. 5) hold a different earbuds specific key pair. Use of different earbuds enables scan of user's ear canal, creating the digital code, *SCAN123,* based on the scan, and finding the match for the digital code representing the biometric scan from the NFT *token001.* This is enabled by the encryption key pair, which is common to the set of apparatuses. The set of apparatuses may comprise multiple or all apparatuses of a manufacturer; apparatuses of a developer or a subscriber; or apparatuses of the same kind, type, model, and/or brand. Content of an NFT field containing an apparatus identifier, like a MAC address, is not encrypted, so it is available with out decryption. The apparatus identifier field of the NFT may be investigated without any decryption. USER field of the NFT cannot be decrypted without the specific private key, which is unique for a user apparatus. So, authentication cannot be successfully completed as in Fig. 4, since another piece of earbuds is used in the embodiment of Fig. 5. In order to enable authentication, other NFTs may be utilized in addition to the digital code based on the ear canal scan. This is done in order to show proof that the user who is trying to access to the web service is the user he/she claims to be.

The user may have other apparatus or wearable device or sensors, which are configured to be connected to the earbuds or to the same user device with the earbuds. In this example, the user wears sneakers that are in connection with the earbuds or with the same mobile device as the earbuds. The connection may be wired or wireless, for example local near field connection, like Bluetooth, WiFi, QR-code scan, or any other suitable connection. The user may be informed that authentication requires use of another registered device. In addition, or alternatively, the user device may be configured to search additional NFTs, if the authentication is not successful based on the formed biometric code. Additional NFTs may be searched based on the NFTOWNER field, which is configured to identify owner of the NFT. The owner field containing the owner identifier is searched from the NFT of token id: *token001.* If the same owner identifier, is detected from other, one or more additional NFT(s), one, multiple or all of those may be utilized. In embodiment of Fig. 5, the user wears sneakers, which are connected to the earbuds or to the same user device as the earbuds. The NFT of token id *token987* has been created for the sneakers with the same owner id than the *token001.*

At phase 503, the user device is configured to send the digital code, *SCAN123,* and token identifiers of *token001* and *token987* to the web service. Before transmission, the user device is configured to encrypt data using public code of the web service, Pub-Key-S.

At phase 504, in response to receiving the digital code and token identifiers, the web service is configured to search the blockchain. The blockchain may be created by the web service or be the same used by the user device. The NFT fields containing token identifier(s) are searched based on the received token id(s) of *token001,* and in this case *token002* is found. The SCAN field of the found *token002* is decrypted and the resulting digital code *SCAN123* is compared with the digital code, *SCAN123,* received from the device. In this case the digital codes are found to match. Based on the matching digital codes, it is assumed that the user, as identified in the USER field of the NFT of the web service, is performing authentication in order to access to the web service. However, in this case no user identifier, *USERXYZ001,* was received from the user device. Due to use of different earbuds, the used earbuds cannot access the user identifier, which has been encrypted using unique encryption key of other earbuds. The user identifier, as not received, cannot be compared or confirmed. Since the earbuds requesting authentication are different from those that have been used for creating the NFT including information for authentication, and the user identifier is not received, additional credentials may be used, searched or requested.

The web service may have received - in addition to the NFT identifier of *token001* and *token987,* and the digital code of *SCAN123* - an NFT owner identifier. The web service may be configured to make a query to the NFT of token id: *token001* in order to find owner identifier of the NFT *token001.* The information is in the NFTOWNER field of the NFT. The NFT *token002* of the web service comprises list of additional NFTs, which have been send by the user, in the field NFTLIST. The web service has received additional NFT of *token987.* The web service compares the received *token987* with the content listed in its NFT of *token002* in the field NFTLIST. The additional NFT(s) that were received from the user device, is/are compared with the content of the NFTLIST of the NFT of the web service. The received token identifiers shall match with the listed token identifiers in the NFT field of the NFTLIST. In case there is any difference, for example different number of NFTs, the web service may reject authentication of the user. In case the received and listed NFTs are found to match, the web service is configured to authenticate the user to the web service. The service may have different levels of permissions, which may be selected based on the authentication, like number of NFTs and/or strength of the authentication. The users may be provided with different permissions based on the way and/or strength of their authentication.

An additional authentication mechanism may comprise contacting the user. A user device may be comprise or have access to contact information of the device owner. Upon registration, like in Fig. 3, the user device may fetch a contact information from internal settings or access to another device or server for the contact information. The contact information may comprise email address, user identifier of a service, like instant messaging, a phone number, or any other contact information. In case the owner has given permission to share the contact information with external services, the contact information may be added to the authentication message. Registration to a service, as in Fig. 3, may include encrypting contact information and sending to the service with the other data, as described with Fig. 3. The service receiving the data is configured to store also the contact information inside NFT token, *token002.* In case authentication is requested via another (borrowed) device, which is not registered in the NFTs as owned by the user, the service receiving the authentication request may, in addition, be configured to try to contact the user. This way the user may be alerted on access request on their name, and the user is able to confirm own identity by responding to contact from the service. This enables providing additional confirmation for authenticating the correct person.

In the previous earbuds or smart earbuds have been illustrated by way of an example of a user device or part of it. A device and an apparatus may be used as synonyms. The earbuds may be replaced with any device capable of capturing and/or storing biometric data of a user, such as smart clothes, smart wear, smart jewellery, or smart watches. The user device may refer to one or more sensor for capturing and transmitting a biometric data of a user. The user device may refer to a device receiving the sensor data captured from the user. The user device may comprise, have access or be connected to one or more sensor. In the previous ear canal of the user is scanned in order to get biometric data, which is unique for the user. In addition or instead, a camera or a scanner may be used for scanning a fingerprint, face or eye of the user. Infrared sensor may be used to detect a shape, for example of an iris. Eyewear or head mounted devices may be used for eye/retinal scan. Smart clothes, jewellery, sport bands, skin electronics or smart clocks may include sensor for detecting heart rate and/or ECG of the user. Heart rate may be utilized in combination with some other identifier in order to provide a unique biometric identifier for the user. Behavioural biometric identifiers may be recorded and analysed based on walking style, speech, expressions of face or muscle signals. In some cases, biometric identifier may be based on analysed samples of hair or saliva, for example. A user may be requested to record a biometric identifier, or a biometric identifier may be captured by a user device automatically, without input from the user. Based on one or more biometric identifiers, as captured, a digital code is formed. The digital code of any source of biometric identifier may be used as described in this application.

A connection between the user device and the web service to which the user device is accessing/authenticating may be based on any technology. It may comprise a short range technologies, like Wi-Fi or Bluetooth, a cellular technology, or an internet protocol, IP, technology. The user device and the web service side communicate via any suitable communication link. The user devices used by the user, whether owned by the user or not, may have a mutual connection. The user device may comprise local wireless connection to one or more accessory or part. The connection may comprise a short range or near field connection, like Wi-Fi or Bluetooth.

In addition, or alternatively, the connection of the user devices may be based on the devices being paired, or connected for example using QR-code scan. The user device may comprise a mobile device, in connection with a wearable device or a sensor. The user device may comprise an integral or a connected parts or functions for implementing biometric authentication as illustrated in this application. The user device may comprise a device or a part for connecting to a network, for example to a web service, and one or more accessory or part connected to it.
It is possible that the user has in use a further device, like a smartphone, laptop or a computer, via which the user device that are used for authentication, are connected. The web service may comprise any provided web-, digital- or other service, where authentication of the user is required for access.

Figure 6 illustrates a method in accordance with at least some example embodiments. The method relates to registration to a service by a user at a user device. The method comprises receiving a random code 601. In response to receiving the random code, the method comprises sending the received random code and a public key common to a set of apparatuses to the service 602. The set of apparatuses comprises the user device. The method comprises receiving a user identifier and a public key of the service 603. The received user identifier may be encrypted using the public key common to the set of devices, which was sent with the random code in phase 602. In response to receiving the user identifier, the method comprises obtaining a biometric data of the user at phase 604. The method may comprise capturing, catching, recording, sensing, recording or measuring the biometric data. The method comprises converting the obtained biometric data to digital form of biometric code. The method comprises creating an NFT token at phase 605. The method may comprise storing to NFT fields a token id, the biometric code encrypted using the public key common to the set of apparatuses, an apparatus identifier of the device, the received user id encrypted using a public key specific to the device, and ownership data of the NFT. The method comprises sending data including the biometric code, the user id, the id of the created NFT, and the owner id at phase 606. The method comprises encrypting the data using public key of the service before sending the data to the service. The method may comprise including other NFT(s), or token identifiers, of the user, or NFT owner, to the data to be sent.

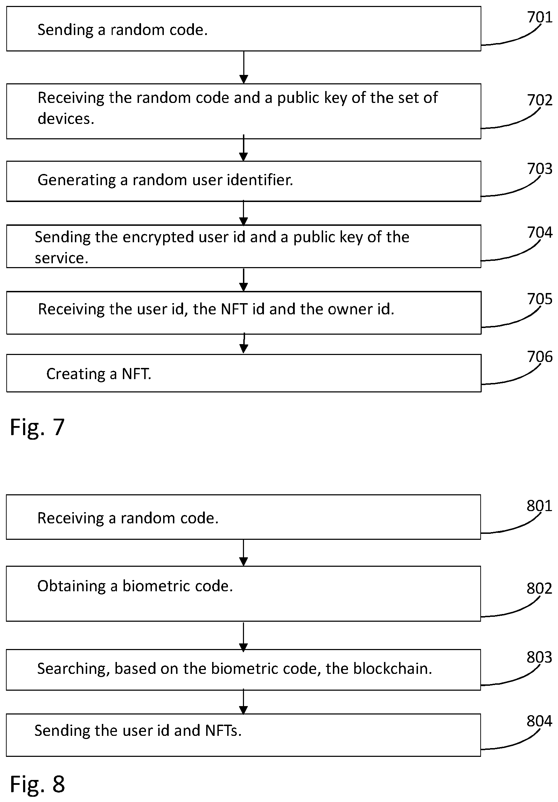

Figure 7 illustrates a method in accordance with at least some example embodiments. The method relates to registration by a user device, at a service. The method comprises sending a random code at phase 701. The method may comprise searching for devices capable of accessing to the service. The method may comprise generating a random code. The method comprises receiving, at phase 702, the random code and a public encryption key common to a set of apparatuses. A user device, which is registering to the service, is comprised in the set of apparatuses. In response to receiving the data at phase 702, the method comprises generating a random user id at phase 703. The method comprises encrypting the user id using the received public key common to the set of apparatuses. The method comprises sending the encrypted user id and a public key of the service at phase 704, back to the user device. The method comprises receiving the user id, the NFT id, a biometric scan in digital form, and the owner id, all encrypted using the public key of the service, at phase 705. The method comprises creating a NFT at phase 706. The method comprises storing to the NFT fields containing a user id, a token id, a NFT id, an array of one or more additional NFT ids, if received, and the biometric code. The method comprises encrypting data contained in the NFT fields using private key of the service. The NFT is usable for authenticating the user to the service.

Figure 8 illustrates a method in accordance with at least some example embodiments. The method at a user device side relates to authenticating a user to a service. The method comprises receiving a random code and a public key of a service at phase 801. The method comprises obtaining a biometric identifier of a user at phase 802. This further comprises converting the obtained biometric identifier to a digital form of a biometric code. The method comprises searching in the blockchain at phase 803, a block that holds the biometric code encrypted using public key common to a set of apparatuses, which set comprises the user device. If the block or NFT is not found, it may be informed to the user via the device and the method is interrupted. If a match is found, the method comprises comparing whether NFT field containing a user device identifier, for example the MAC address, and the identifier of the user device match. If also the stored device identifier is found to match with the apparatus identifier of the user device, the device continues by decrypting user field of the NFT using unique private key of the device. Further, the device continues by encrypting the user id using the public key of the service, which was received at phase 801. In case the user is owner of other NFT(s), the method may comprise listing those. The method comprises sending the encrypted user id and tokens, or NFT ids, to the service, at phase 804. The method may comprise receiving access to the service.

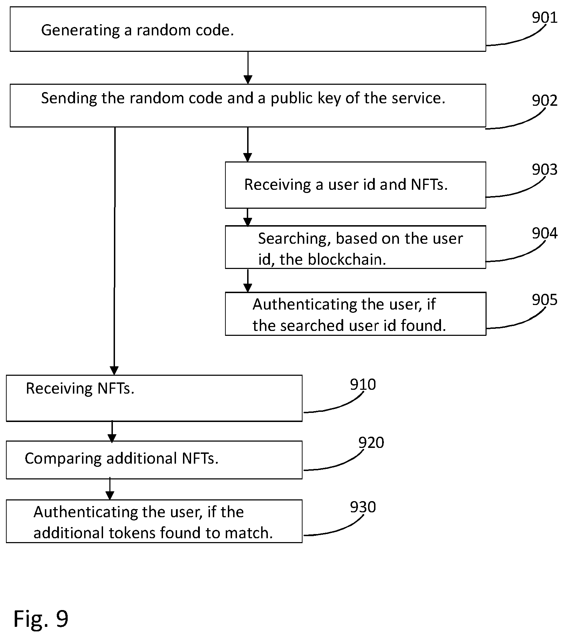

Figure 9 illustrates a method in accordance with at least some example embodiments. The method at a service side relates to authenticating a user to a service. The method comprises generating a random code at phase 901. The method comprises sending the random code and a public key of the service at phase 902. These may be sent to a device as a login request. The method comprises receiving a user id and token ids of NFTs, both encrypted using the public key of the service at phase 903. The method comprises decrypting the user id using the private key of the service. The method comprises searching, based on the decrypted user id, the blockchain, which comprises data for authentication stored in NFTs, at phase 904. In case a NFT storing the user field is found, the method continues by authenticating the user at phase 905. The service may provide access to the user via the requesting device.

In case the method comprises receiving token ids of NFTs, both encrypted using the public key of the service at phase 903, but no user id, the method continues after phase 902 by searching the blockchain based on a received token id, at phase 910. A NFT of the service is found based on the search. The method comprises comparing the received biometric scan with the biometric scan in the found NFT of the service. If these are found matching, it is an indication towards authenticating the person. However, it is not enough, since the user id cannot be confirmed. Method continues with NFT owner information. This may comprise making a query to the received NFT id in order to get the owner information. The owner information is used to confirm that owner of the received one or more additional NFT(s) (token ids) match to the information stored in the NFTLIST of the NFT at phase 920. The received array of tokens may be required to match the list of tokens in the NFTLIST field of the NFT of the service. If array of tokens is matching at phase 930, the user is authenticated.

In addition, the method may comprise including contact information of the user upon registration to information sent from a device and received by a service. The contact information may be stored to the NFT of the service. Such may be used additionally to confirm that the registering user is the one they claim to be.

It is to be understood that the embodiments of the invention disclosed are not limited to the particular structures, process steps, or details disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one example embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof.

Furthermore, the described features, structures, or characteristics may be combined in any suitable manner in one or more embodiments. In the preceding description, numerous specific details are provided, such as examples of devices, methods, systems, etc., to provide a thorough understanding of embodiments of the invention. One skilled in the relevant art will recognize, however, that the invention can be practiced without one or more of the specific details, or with other methods, components, etc. In other instances, well-known structures, materials, or operations are not shown or described in detail to avoid obscuring aspects of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. A user apparatus for registration to a service, the user apparatus comprising or connected to:
- means for receiving a random code of the service,
- means for sending the received random code and a public encryption key common to a set of apparatuses, wherein the set of apparatuses comprises the user apparatus,
- means for receiving a user identifier and a public key of the service, wherein the user identifier is encrypted using the public encryption key common to the set of apparatuses,
- means for obtaining biometric data of a user of the user apparatus,
- means for converting the biometric data into a biometric code, which is a digital representation of the obtained biometric data of the user,
- means for creating a non-fungible token, NFT, to a blockchain, wherein the NFT comprises
∘ an NFT identifier,
∘ the biometric code encrypted using the public encryption key common to the set of apparatuses,
∘ an apparatus identifier of the user apparatus,
∘ the user identifier encrypted using public encryption key of the user apparatus, and
∘ an NFT owner identifier, and
- means for sending, to the service, the NFT identifier, the biometric code, the user identifier, and NFT owner identifier, wherein the NFT identifier, the biometric code, the user identifier, and the NFT owner identifier are encrypted using the public encryption key of the service.

2. A user apparatus for authentication of a user to access a service comprising or connected to:
- means for receiving a random code and a public key of the service,
- means for obtaining a biometric data of the user of the user apparatus,
- means for converting the biometric data into a biometric code, which is a digital representation of the obtained biometric data of the user,
- means for searching from a blockchain a non-fungible token, NFT, including the biometric code encrypted using a public encryption key common to set of apparatuses, wherein the set of apparatuses comprises the user apparatus,
- means for comparing an apparatus identifier stored in the NFT, which was found to include the biometric code, with the apparatus identifier of the user apparatus,
- means for decrypting a user identifier of the NFT using private encryption key of the apparatus, if the apparatus identifier stored in the NFT is found to match with the apparatus identifier of the user apparatus, and
- means for sending the user identifier of the NFT encrypted using the received public encryption key of the service, if the apparatus identifier stored in the NFT is found to match with the apparatus identifier of the user apparatus.

3. The user apparatus of claim 1 or 2, wherein the user apparatus comprises the encryption key pair common to the set of apparatuses and the encryption key pair unique to the apparatus.

4. The user apparatus of claim 1 or 2; or preceding claim 3 dependent on claim 1 or 2, wherein the user apparatus comprises or is connected to at least one of: a wearable device, a sensor, a smart electric device, a smartwear, skin electronics, a digital textile, an eyewear, glasses, a smartwatch, a smartshoe, a jewellery, earbuds, a mobile device, a user equipment, and a wristband.

5. The user apparatus of claim 1 or 2; or any preceding claims 3-4 dependent on claim 1 or 2, wherein means for obtaining the biometric data of a user comprise at least one of: a camera, a scanner, an ear scanner, an eye scanner, a touch screen, a heart rate sensor, an electrocardiography, and an infrared sensor.

6. The user apparatus of claim 1 or 2; or any preceding claims 3-5 dependent on claim 1 or 2, wherein the biometric data comprises an unique identifier of the user; and/or wherein the apparatus identifier comprises a media access control address.

7. The user apparatus of claim 1 or 2; or any preceding claims 3-6 dependent on claim 1 or 2, wherein in addition to the NFT, the blockchain comprises one or more additional NFT, where the NFT and the one or more additional NFT comprise the same NFT owner identifiers and the same biometric codes encrypted using the same public encryption key common to the set of apparatuses; and/or different apparatus identifiers.

8. The user apparatus of any preceding claims 2 or claims 3-7 dependent on claim 2, comprising or connected to:
- means for searching from the blockchain one or more additional NFT, including the same NFT owner and the same biometric code, as included in the NFT already found based on the biometric code;
- means for sending an identifier of the one or more additional NFT with the user identifier of the NFT, in case the apparatus identifier of the one or more additional NFT is found to match with the apparatus identifier of the user apparatus; and
- means for sending an identifier of the one or more additional NFT without the user identifier of the one or more additional NFT, in case the apparatus identifier of the one or more additional NFT is found to match with the apparatus identifier of the user apparatus.

9. The user apparatus of claim 1 or 2; or any preceding claims 3-8 dependent on claim 1or 2, wherein means comprise at least one processor; and at least one memory including computer program code, the at least one memory and computer program code configured to, with the at least one processor, cause, at least partly, the performance of the apparatus.

10. A method for registration of a user to a service comprising:
- receiving, by a user apparatus, a random code of the service,
- sending, by the user apparatus, the received random code and a public encryption key common to a set of apparatuses, wherein the set of apparatuses comprises the user apparatus,
- receiving, by the user apparatus, a user identifier and a public key of the service, wherein the user identifier is encrypted using the public encryption key common to the set of apparatuses,
- obtaining, by the user apparatus, biometric data of a user of the user apparatus,
- converting, by the user apparatus, the biometric data into a biometric code, which is a digital representation of the obtained biometric data,
- creating, by the user apparatus, a non-fungible token, NFT, to a blockchain, wherein the NFT comprises
∘ an NFT identifier,
∘ the biometric code encrypted using the public encryption key common to the set of apparatuses,
∘ an apparatus identifier of the user apparatus,
∘ the user identifier encrypted using public encryption key of the apparatus and
∘ an NFT owner identifier, and
- sending, by the user apparatus, the NFT identifier, the biometric code, the user identifier, and NFT owner identifier, wherein the NFT identifier, the biometric code, the user identifier, and the NFT owner identifier are encrypted using the public encryption key of the service.

11. An apparatus for registering a user to a service comprising
- means for sending a random code;
- means for receiving, from a user apparatus, the random code and a public key common to a set of apparatuses, wherein the set of apparatuses comprises the user apparatus,
- means for generating a user identifier,
- means for sending the user identifier encrypted using the public key common to the set of apparatuses, and a public encryption key of the service,
- means for receiving a non-fungible token, NFT, identifier; a biometric code, which is a representation of a biometric data of the user; the user identifier; and the NFT owner identifier; wherein the NFT identifier, the biometric code, the user identifier, and the NFT owner identifier being encrypted using the public key of the service,
- means for creating a NFT comprising the received user identifier, the received NFT identifier, the received NFT owner identifier, and the received biometric code, wherein the user identifier, the NFT identifier, the NFT owner identifier, and the biometric code being encrypted using the private encryption key of the service, and
- storing the created NFT to a blockchain.

12. The apparatus of claim 11, comprising means for receiving, in addition to the received NFT, one or more additional NFT, where the received NFT and the one or more additional NFT comprise the same NFT owner identifiers and the same biometric codes encrypted using the same public encryption key common to the set of apparatuses; and means for storing to the created NFT the NFT identifiers of the one or more additional NFT.

13. The method for registering a user to a service comprising
- sending, by an apparatus, a random code to a user apparatus,
- receiving, from the user apparatus, the random code and a public encryption key common to a set of apparatuses, wherein the set of apparatuses comprises the user apparatus,
- providing, by the apparatus, a user identifier,
- sending, by the apparatus, the user identifier encrypted using the public encryption key common to the set of apparatuses, and a public encryption key of the service,
- receiving, by the apparatus, a non-fungible token, NFT, identifier, an NFT owner identifier, the user identifier and a biometric code, which is a representation of a biometric data of the user, wherein the NFT identifier, the NFT owner identifier, the user identifier and the biometric code being encrypted using the public key of the service,
- creating, by the apparatus, a NFT by storing the received user identifier, the received NFT owner identifier, the received NFT identifier, and the received biometric code, wherein the user identifier, the NFT owner identifier, the NFT identifier and the biometric code being encrypted using the private encryption key of the service, and
- storing the created NFT to a blockchain.

14. The method of claim 13, comprising receiving, by the apparatus, one or more additional NFT and storing the one or more additional NFT to the NFT, which is being created.

15. A method for authenticating a user apparatus to a service comprising
- receiving, by the user apparatus, a random code and a public key of the service,
- obtaining, by the user apparatus, a biometric data of a user of the user apparatus, converting, by the user apparatus, the biometric data into a biometric code, which is a digital representation of the obtained biometric data of the user,
- searching, by the user apparatus, from a blockchain a non-fungible token, NFT, including the biometric code encrypted using public encryption key common to a set of apparatuses, wherein the set of apparatuses comprises the user apparatus,
- comparing, by the user apparatus, an apparatus identifier stored in the NFT, which was found to include the biometric code, with the apparatus identifier of the user apparatus, and if the apparatus identifier stored in the NFT and the apparatus identifier of the user apparatus are found to match:
∘ decrypting, by the user apparatus, a user identifier of the NFT using private encryption key of the apparatus, and
∘ sending, by the user apparatus, the user identifier of the NFT encrypted using the received public encryption key of the service.

16. A computer program comprising code for, when executed in a data processing apparatus, causing the apparatus to perform a method in accordance with any one of claims 10, and 13- 15.

## Patentansprüche

1. Benutzervorrichtung zur Registrierung bei einem Dienst, wobei die Benutzervorrichtung umfasst oder verbunden ist mit:
- Mitteln zum Empfangen eines Zufallscodes des Dienstes,
- Mitteln zum Senden des empfangenen Zufallscodes und eines öffentlichen Verschlüsselungsschlüssels, der einer Menge von Vorrichtungen gemein ist, wobei die Menge von Vorrichtungen die Benutzervorrichtung umfasst,
- Mitteln zum Empfangen einer Benutzerkennung und eines öffentlichen Schlüssels des Dienstes, wobei die Benutzerkennung unter Verwendung des öffentlichen Verschlüsselungsschlüssels verschlüsselt wird, welcher der Menge von Vorrichtungen gemein ist,
- Mitteln zum Erhalten biometrischer Daten eines Benutzers der Benutzervorrichtung,
- Mitteln zum Konvertieren der biometrischen Daten in einen biometrischen Code, der eine digitale Darstellung der erhaltenen biometrischen Daten des Benutzers ist,
- Mitteln zum Erzeugen eines Non-Fungible Tokens, NFT, auf einer Blockchain, wobei das NFT umfasst:
∘ eine NFT-Kennung,
∘ den biometrischen Code, der unter Verwendung des öffentlichen Verschlüsselungsschlüssels verschlüsselt wird, welcher der Menge von Vorrichtungen gemein ist,
∘ eine Vorrichtungskennung der Benutzervorrichtung,
∘ die Benutzerkennung, die unter Verwendung des öffentlichen Verschlüsselungsschlüssels der Benutzervorrichtung verschlüsselt wird, und
∘ eine NFT-Inhaberkennung, und
- Mittel zum Senden, an den Dienst, der NFT-Kennung, des biometrischen Codes, der Benutzerkennung und der NFT-Inhaberkennung, wobei die NFT-Kennung, der biometrische Code, die Benutzerkennung und die NFT-Inhaberkennung unter Verwendung des öffentlichen Verschlüsselungsschlüssels des Dienstes verschlüsselt werden.

2. Benutzervorrichtung zur Authentifizierung eines Benutzers zum Zugreifen auf einen Dienst, die umfasst oder verbunden ist mit:
- Mitteln zum Empfangen eines Zufallscodes und eines öffentlichen Schlüssels des Dienstes,
- Mitteln zum Erhalten biometrischer Daten des Benutzers der Benutzervorrichtung,
- Mitteln zum Konvertieren der biometrischen Daten in einen biometrischen Code, der eine digitale Darstellung der erhaltenen biometrischen Daten des Benutzers ist,
- Mitteln zum Suchen, von einer Blockchain, eines Non-Fungible Tokens, NFT, das den biometrischen Code umfasst, der unter Verwendung eines öffentlichen Verschlüsselungsschlüssels verschlüsselt wird, welcher der Menge von Vorrichtungen gemein ist, wobei die Menge von Vorrichtungen die Benutzervorrichtung umfasst,
- Mitteln zum Vergleichen einer Vorrichtungskennung, die in dem NFT gespeichert ist, für das herausgefunden wurde, dass es den biometrischen Code umfasst, mit der Vorrichtungskennung der Benutzervorrichtung,
- Mitteln zum Entschlüsseln einer Benutzerkennung des NFT unter Verwendung eines privaten Verschlüsselungsschlüssels der Vorrichtung, wenn herausgefunden wird, dass die Vorrichtungskennung, die in dem NFT gespeichert ist, mit der Vorrichtungskennung der Benutzervorrichtung übereinstimmt, und
- Mitteln zum Senden der Benutzerkennung des NFT, das unter Verwendung des empfangenen öffentlichen Verschlüsselungsschlüssels des Dienstes verschlüsselt wird, wenn herausgefunden wird, dass die Vorrichtungskennung, die in dem NFT gespeichert ist, mit der Vorrichtungskennung der Benutzervorrichtung übereinstimmt.

3. Benutzervorrichtung nach Anspruch 1 oder 2, wobei die Benutzervorrichtung das Verschlüsselungsschlüsselpaar, das der Menge von Vorrichtungen gemein ist, und das Verschlüsselungsschlüsselpaar umfasst, das für die Vorrichtung eindeutig ist.

4. Benutzervorrichtung nach Anspruch 1 oder 2; oder dem vorhergehenden Anspruch 3 abhängig von Anspruch 1 oder 2, wobei die Benutzervorrichtung umfasst oder verbunden ist mit mindestens einem von: einem tragbaren Gerät, einem Sensor, einem intelligenten elektrischen Gerät, einer intelligenten Kleidung, Hautelektronik, einem digitalen Textil, einer Augenbekleidung, einer Brille, einer Smartwatch, einem intelligenten Schuh, einem Schmuckstück, Ohrhörern, einem mobilen Gerät, einem User Equipment und einem Armband.

5. Benutzervorrichtung nach Anspruch 1 oder 2; oder einem der vorhergehenden Ansprüche 3 bis 4 abhängig von Anspruch 1 oder 2, wobei Mittel zum Erhalten der biometrischen Daten eines Benutzers mindestens eines umfassen von: einer Kamera, einem Scanner, einem Ohrenscanner, einem Augenscanner, einem berührungsempfindlichen Bildschirm, einem Herzfrequenzsensor, einer Elektrokardiographie und einem Infrarotsensor.

6. Benutzervorrichtung nach Anspruch 1 oder 2; oder einem der vorhergehenden Ansprüche 3 bis 5 abhängig von Anspruch 1 oder 2, wobei die biometrischen Daten eine eindeutige Kennung des Benutzers umfassen; und/oder wobei die Vorrichtungskennung eine Media-Access-Control-Adresse umfasst.

7. Benutzervorrichtung nach Anspruch 1 oder 2; oder einem der vorhergehenden Ansprüche 3 bis 6 abhängig von Anspruch 1 oder 2, wobei zusätzlich zum NFT, die Blockchain ein oder mehrere zusätzliche NFTs umfasst, wobei das NFT und das eine oder die mehreren zusätzlichen NFTs die gleichen NFT-Inhaberkennungen und die gleichen biometrischen Codes, die unter Verwendung des gleichen öffentlichen Verschlüsselungsschlüssels verschlüsselt werden, welcher der Menge von Vorrichtungen gemein ist; und/oder unterschiedliche Vorrichtungskennungen umfassen.

8. Benutzervorrichtung nach einem der vorhergehenden Ansprüche 2 oder Ansprüche 3 bis 7 abhängig von Anspruch 2, die umfasst oder verbunden ist mit:
- Mitteln zum Suchen, von der Blockchain, eines oder mehrerer zusätzlicher NFTs, die den gleichen NFT-Inhaber und den gleichen biometrischen Code umfassen wie in dem NFT enthalten, das bereits basierend auf dem biometrischen Code gefunden wurde;
- Mitteln zum Senden einer Kennung des einen oder der mehreren zusätzlichen NFTs mit der Benutzerkennung des NFT, falls herausgefunden wird, dass die Vorrichtungskennung des einen oder der mehreren zusätzlichen NFTs mit der Vorrichtungskennung der Benutzervorrichtung übereinstimmt; und
- Mittel zum Senden einer Kennung der einen oder mehreren zusätzlichen NFTs ohne die Benutzerkennung des einen oder der mehreren zusätzlichen NFTs, falls herausgefunden wird, dass die Vorrichtungskennung des einen oder der mehreren zusätzlichen NFTs mit der Vorrichtungskennung der Benutzervorrichtung übereinstimmt.

9. Benutzervorrichtung nach Anspruch 1 oder 2; oder einem der vorhergehenden Ansprüche 3 bis 8 abhängig von Anspruch 1 oder 2, wobei die Mittel mindestens einen Prozessor; und mindestens einen Speicher umfassen, der Computerprogrammcode umfasst, wobei der mindestens eine Speicher und Computerprogrammcode dazu ausgestaltet sind, mit dem mindestens einen Prozessor zumindest teilweise das Durchführen der Vorrichtung zu bewirken.

10. Verfahren zum Registrieren eines Benutzers bei einem Dienst, umfassend:
- Empfangen, durch eine Benutzervorrichtung, eines Zufallscodes des Dienstes,
- Senden, durch die Benutzervorrichtung, des empfangenen Zufallscodes und eines öffentlichen Verschlüsselungsschlüssels, der einer Menge von Vorrichtungen gemein ist, wobei die Menge von Vorrichtungen die Benutzervorrichtung umfasst,
- Empfangen, durch die Benutzervorrichtung, einer Benutzerkennung und eines öffentlichen Schlüssels des Dienstes, wobei die Benutzerkennung unter Verwendung des öffentlichen Verschlüsselungsschlüssels verschlüsselt wird, welcher der Menge von Vorrichtungen gemein ist,
- Erhalten, durch die Benutzervorrichtung, biometrischer Daten eines Benutzers der Benutzervorrichtung,
- Konvertieren, durch die Benutzervorrichtung, der biometrischen Daten in einen biometrischen Code, der eine digitale Darstellung der erhaltenen biometrischen Daten ist,
- Erzeugen, durch die Benutzervorrichtung, eines Non-Fungible Tokens, NFT, auf einer Blockchain, wobei das NFT umfasst:
∘ eine NFT-Kennung,
∘ den biometrischen Code, der unter Verwendung des öffentlichen Verschlüsselungsschlüssels verschlüsselt wird, welcher der Menge von Vorrichtungen gemein ist,
∘ eine Vorrichtungskennung der Benutzervorrichtung,
∘ die Benutzerkennung, die unter Verwendung des öffentlichen Verschlüsselungsschlüssels der Vorrichtung verschlüsselt wird, und
∘ eine NFT-Inhaberkennung, und
- Senden, durch die Benutzervorrichtung, der NFT-Kennung, des biometrischen Codes, der Benutzerkennung und der NFT-Inhaberkennung, wobei die NFT-Kennung, der biometrische Code, die Benutzerkennung und die NFT-Inhaberkennung unter Verwendung des öffentlichen Verschlüsselungsschlüssels des Dienstes verschlüsselt werden.

11. Vorrichtung zum Registrieren eines Benutzers bei einem Dienst, umfassend:
- Mittel zum Senden eines Zufallscodes;
- Mittel zum Empfangen, von einer Benutzervorrichtung, des Zufallscodes und eines öffentlichen Schlüssels, der einer Menge von Vorrichtungen gemein ist, wobei die Menge von Vorrichtungen die Benutzervorrichtung umfasst,
- Mittel zum Erzeugen einer Benutzerkennung,
- Mittel zum Senden der Benutzerkennung, die unter Verwendung des öffentlichen Schlüssels verschlüsselt wird, welcher der Menge von Vorrichtungen gemein ist, und eines öffentlichen Verschlüsselungsschlüssels des Dienstes,
- Mittel zum Empfangen einer Non-Fungible Token, NFT, Kennung, eines biometrischen Codes, der eine Darstellung biometrischer Daten des Benutzers ist; der Benutzerkennung; und der NFT-Inhaberkennung; wobei die NFT-Kennung, der biometrische Code, die Benutzerkennung und die NFT-Inhaberkennung unter Verwendung des öffentlichen Schlüssels des Dienstes verschlüsselt werden;
- Mittel zum Erzeugen eines NFT, das die empfangene Benutzerkennung, die empfangene NFT-Kennung, die empfangene NFT-Inhaberkennung und den empfangenen biometrischen Code umfasst, wobei die Benutzerkennung, die NFT-Kennung, die NFT-Inhaberkennung und der biometrische Code unter Verwendung des privaten Verschlüsselungsschlüssels des Dienstes verschlüsselt werden, und
- Speichern des erzeugten NFT auf einer Blockchain.

12. Vorrichtung nach Anspruch 11, umfassend Mittel zum Empfangen, zusätzlich zu dem empfangenen NFT, eines oder mehrerer zusätzlicher NFTs, wobei das empfangene NFT und das eine oder die mehreren zusätzlichen NFTs die gleichen NFT-Inhaberkennungen und die gleichen biometrischen Codes umfassen, die unter Verwendung des gleichen öffentlichen Verschlüsselungsschlüssels verschlüsselt werden, welcher der Menge von Vorrichtungen gemein ist; und Mittel zum Speichern der NFT-Kennungen des einen oder der mehreren zusätzlichen NFTs auf dem erzeugten NFT.

13. Verfahren zum Registrieren eines Benutzers bei einem Dienst, umfassend:
- Senden, durch eine Vorrichtung, eines Zufallscodes an eine Benutzervorrichtung,
- Empfangen, von der Benutzervorrichtung, des Zufallscodes und eines öffentlichen Verschlüsselungsschlüssels, der einer Menge von Vorrichtungen gemein ist, wobei die Menge von Vorrichtungen die Benutzervorrichtung umfasst,
- Bereitstellen, durch die Vorrichtung, einer Benutzerkennung,
- Senden, durch die Vorrichtung, der Benutzerkennung, die unter Verwendung des öffentlichen Verschlüsselungsschlüssels verschlüsselt wird, welcher der Menge von Vorrichtungen gemein ist, und eines öffentlichen Verschlüsselungsschlüssels des Dienstes,
- Empfangen, durch die Vorrichtung, einer Non-Fungible Token, NFT, Kennung, einer NFT-Inhaberkennung, der Benutzerkennung und eines biometrischen Codes, der eine Darstellung biometrischer Daten des Benutzers ist, wobei die NFT-Kennung, die NFT-Inhaberkennung, die Benutzerkennung und der biometrische Code unter Verwendung des öffentlichen Schlüssels des Dienstes verschlüsselt werden,
- Erzeugen, durch die Vorrichtung, einer NFT, durch Speichern der empfangenen Benutzerkennung, der empfangenen NFT-Inhaberkennung, der empfangenen NFT-Kennung und des empfangenen biometrischen Codes, wobei die Benutzerkennung, die NFT-Inhaberkennung, die NFT-Kennung und der biometrische Code unter Verwendung des privaten Verschlüsselungsschlüssels des Dienstes verschlüsselt werden, und
- Speichern des erzeugten NFT auf einer Blockchain.

14. Verfahren nach Anspruch 13, umfassend das Empfangen, durch die Vorrichtung, eines oder mehrerer zusätzlicher NFTs und Speichern des einen oder der mehreren zusätzlichen NFTs auf dem NFT, das erzeugt wird.

15. Verfahren zum Authentifizieren einer Benutzervorrichtung bei einem Dienst, umfassend:
- Empfangen, durch die Benutzervorrichtung, eines Zufallscodes und eines öffentlichen Schlüssels des Dienstes,
- Erhalten, durch die Benutzervorrichtung, biometrischer Daten eines Benutzers der Benutzervorrichtung,
- Konvertieren, durch die Benutzervorrichtung, der biometrischen Daten in einen biometrischen Code, der eine digitale Darstellung der erhaltenen biometrischen Daten des Benutzers ist,
- Suchen, durch die Benutzervorrichtung, von einer Blockchain, eines Non-Fungible-Tokens, NFT, das den biometrischen Code umfasst, der unter Verwendung des öffentlichen Verschlüsselungsschlüssels verschlüsselt wird, der einer Menge von Vorrichtungen gemein ist, wobei die Menge von Vorrichtungen die Benutzervorrichtung umfasst,
- Vergleichen, durch die Benutzervorrichtung, einer Vorrichtungskennung, die in dem NFT gespeichert ist, für die herausgefunden wird, dass sie den biometrischen Code umfasst, mit der Vorrichtungskennung der Benutzervorrichtung und, wenn herausgefunden wird, dass die Vorrichtungskennung, die in dem NFT gespeichert ist, und die Vorrichtungskennung der Benutzervorrichtung übereinstimmen:
∘ Entschlüsseln, durch die Benutzervorrichtung, einer Benutzerkennung des NFT unter Verwendung eines privaten Verschlüsselungsschlüssels der Vorrichtung, und
∘ Senden, durch die Benutzervorrichtung, der Benutzerkennung des NFT, die unter Verwendung des empfangenen öffentlichen Verschlüsselungsschlüssels des Dienstes verschlüsselt wird.

16. Computerprogramm, das Computerprogrammcode umfasst, um, wenn er in einer Datenverarbeitungsvorrichtung ausgeführt wird, die Vorrichtung zu veranlassen, ein Verfahren nach einem der Ansprüche 10 und 13 bis 15 durchzuführen.

## Revendications

1. Appareil utilisateur pour l'enregistrement à un service, l'appareil utilisateur comprenant ou étant connecté à :
- des moyens pour recevoir un code aléatoire du service,
- des moyens pour envoyer le code aléatoire reçu et une clé publique de chiffrement commune à un ensemble d'appareils, dans lequel l'ensemble d'appareils comprend l'appareil utilisateur,
- des moyens pour recevoir un identifiant d'utilisateur et une clé publique du service, dans lequel l'identifiant d'utilisateur est chiffré en utilisant la clé publique de chiffrement commune à l'ensemble d'appareils,
- des moyens pour obtenir des données biométriques d'un utilisateur de l'appareil utilisateur,
- des moyens pour convertir les données biométriques en un code biométrique qui est une représentation numérique des données biométriques obtenues de l'utilisateur,
- des moyens pour créer un jeton non fongible, NFT, dans une chaîne de blocs, dans lequel le NFT comprend
∘ un identifiant de NFT,
∘ le code biométrique chiffré en utilisant la clé publique de chiffrement commune à l'ensemble d'appareils,
∘ un identifiant d'appareil de l'appareil utilisateur,
∘ l'identifiant d'utilisateur chiffré en utilisant la clé publique de chiffrement de l'appareil utilisateur, et
∘ un identifiant de propriétaire de NFT, et
- des moyens pour envoyer au service l'identifiant de NFT le code biométrique, l'identifiant d'utilisateur et l'identifiant de propriétaire de NFT, dans lequel l'identifiant de NFT, le code biométrique, l'identifiant d'utilisateur et l'identifiant de propriétaire de NFT sont chiffrés en utilisant la clé publique de chiffrement du service.

2. Appareil utilisateur pour l'authentification d'un utilisateur pour accéder à un service comprenant ou étant connecté à :
- des moyens pour recevoir un code aléatoire et une clé publique du service,
- des moyens pour obtenir des données biométriques de l'utilisateur de l'appareil utilisateur,
- des moyens pour convertir les données biométriques en un code biométrique qui est une représentation numérique des données biométriques obtenues de l'utilisateur,
- des moyens pour rechercher dans une chaîne de blocs un jeton non fongible, NFT, comportant le code biométrique chiffré en utilisant une clé publique de chiffrement commune à un ensemble d'appareils, dans lequel l'ensemble d'appareils comprend l'appareil utilisateur,
- des moyens pour comparer un identifiant d'appareil stocké dans le NFT jugé comme comportant le code biométrique avec l'identifiant d'appareil de l'appareil utilisateur,
- des moyens pour déchiffrer un identifiant d'utilisateur du NFT en utilisant la clé de chiffrement privée de l'appareil si l'identifiant d'appareil stocké dans le NFT est jugé comme concordant avec l'identifiant d'appareil de l'appareil utilisateur, et
- des moyens pour envoyer l'identifiant d'utilisateur du NFT chiffré en utilisant la clé publique de chiffrement reçue du service si l'identifiant d'appareil stocké dans le NFT est jugé comme concordant avec l'identifiant d'appareil de l'appareil utilisateur.

3. Appareil utilisateur selon la revendication 1 ou 2, dans lequel l'appareil utilisateur comprend la paire de clés de chiffrement commune à l'ensemble d'appareils et la paire de clés de chiffrement propres à l'appareil.

4. Appareil utilisateur selon la revendication 1 ou 2, ou selon la revendication précédente 3 dépendant de la revendication 1 ou 2, dans lequel l'appareil utilisateur comprend ou est connecté à au moins un parmi : un dispositif à porter, un capteur, un dispositif électrique intelligent, un vêtement intelligent, une peau électronique, un textile numérique, des articles de lunetterie, des lunettes, une montre intelligente, des chaussures intelligentes, un bijou, des écouteurs-boutons, un dispositif mobile, un équipement utilisateur et un bracelet.

5. Appareil utilisateur selon la revendication 1 ou 2, ou selon l'une des revendications précédentes 3 et 4 dépendant de la revendication 1 ou 2, dans lequel des moyens pour obtenir les données biométriques d'un utilisateur comprennent au moins un parmi : une caméra, un scanner, un scanner auriculaire, un scanner oculaire, un écran tactile, un capteur de fréquence cardiaque, un électrocardiographe et un capteur infrarouge.

6. Appareil utilisateur selon la revendication 1 ou 2, ou selon l'une des revendications précédentes 3 à 5 dépendant de la revendication 1 ou 2, dans lequel les données biométriques comprennent un identifiant unique de l'utilisateur ; et/ou
dans lequel l'identifiant d'appareil comprend une adresse de contrôle d'accès au média.

7. Appareil utilisateur selon la revendication 1 ou 2, ou selon l'une des revendications précédentes 3 à 6 dépendant de la revendication 1 ou 2, dans lequel en plus du NFT, la chaîne de blocs comprend un ou plusieurs NFT supplémentaires, où le NFT et les un ou plusieurs NFT supplémentaires comprennent les mêmes identifiants de propriétaires de NFT et les mêmes codes biométriques chiffrés en utilisant la même clé publique de chiffrement commune à l'ensemble d'appareils ; et/ou des identifiants d'appareil différents.

8. Appareil utilisateur selon l'une des revendications précédentes 2 ou 3 à 7 dépendant de la revendication 2, comprenant ou étant connecté à :
- des moyens pour rechercher dans la chaîne de blocs un ou plusieurs NFT supplémentaires comportant le même propriétaire NFT et le même code biométrique que ceux inclus dans le NFT déjà trouvé sur la base du code biométrique ;
- des moyens pour envoyer un identifiant des un ou plusieurs NFT supplémentaires avec l'identifiant d'utilisateur du NFT dans le cas où l'identifiant d'appareil des un ou plusieurs NFT supplémentaires est jugé comme concordant avec l'identifiant d'appareil de l'appareil utilisateur ; et
- des moyens pour envoyer un identifiant des un ou plusieurs NFT supplémentaires sans l'identifiant d'utilisateur des un ou plusieurs NFT supplémentaires dans le cas où l'identifiant d'appareil des un ou plusieurs NFT supplémentaires est jugé comme concordant avec l'identifiant d'appareil de l'appareil utilisateur.

9. Appareil utilisateur selon la revendication 1 ou 2, ou selon l'une des revendications précédentes 3 à 8 dépendant de la revendication 1 ou 2, dans lequel les moyens comprennent au moins un processeur ; et au moins une mémoire comportant un code de programme informatique, l'au moins une mémoire et le code de programme informatique étant configurés pour, avec l'au moins un processeur, entraîner au moins en partie la performance de l'appareil.

10. Procédé d'enregistrement d'un utilisateur à un service comprenant les étapes suivantes :
- recevoir, par un appareil utilisateur, un code aléatoire du service,
- envoyer, par l'appareil utilisateur, le code aléatoire reçu et une clé publique de chiffrement commune à un ensemble d'appareils, dans lequel l'ensemble d'appareils comprend l'appareil utilisateur,
- recevoir, par l'appareil utilisateur, un identifiant d'utilisateur et une clé publique du service, dans lequel l'identifiant d'utilisateur est chiffré en utilisant la clé publique de chiffrement commune à l'ensemble d'appareils,
- obtenir, par l'appareil utilisateur, des données biométriques d'un utilisateur de l'appareil utilisateur,
- convertir, par l'appareil utilisateur, les données biométriques en un code biométrique qui est une représentation numérique des données biométriques obtenues,
- créer, par l'appareil utilisateur, un jeton non fongible, NFT, dans une chaîne de blocs, dans lequel le NFT comprend
∘ un identifiant de NFT,
∘ le code biométrique chiffré en utilisant la clé publique de chiffrement commune à l'ensemble d'appareils,
∘ un identifiant d'appareil de l'appareil utilisateur,
∘ l'identifiant d'utilisateur chiffré en utilisant la clé publique de chiffrement de l'appareil et
∘ un identifiant de propriétaire de NFT, et
- envoyer, par l'appareil utilisateur, l'identifiant de NFT, le code biométrique, l'identifiant d'utilisateur et l'identifiant de propriétaire de NFT, dans lequel l'identifiant de NFT, le code biométrique, l'identifiant d'utilisateur et l'identifiant de propriétaire de NFT sont chiffrés en utilisant la clé publique de chiffrement du service.

11. Appareil d'enregistrement d'un utilisateur à un service comprenant
- des moyens pour envoyer un code aléatoire ;
- des moyens pour recevoir d'un appareil utilisateur le code aléatoire et une clé publique commune à un ensemble d'appareils, dans lequel l'ensemble d'appareils comprend l'appareil utilisateur,
- des moyens pour générer un identifiant d'utilisateur,
- des moyens pour envoyer l'identifiant d'utilisateur chiffré en utilisant la clé publique commune à l'ensemble d'appareils, et une clé publique de chiffrement du service,
- des moyens pour recevoir un identifiant de jeton non fongible, NFT, un code biométrique qui est une représentation de données biométriques de l'utilisateur ; l'identifiant d'utilisateur ; et l'identifiant de propriétaire de NFT ; dans lequel l'identifiant de NFT, le code biométrique, l'identifiant d'utilisateur et l'identifiant de propriétaire de NFT sont chiffrés en utilisant la clé publique du service,
- des moyens pour créer un NFT comprenant l'identifiant d'utilisateur reçu, l'identifiant de NFT reçu, l'identifiant de propriétaire de NFT reçu et le code biométrique reçu, dans lequel l'identifiant d'utilisateur, l'identifiant de NFT, l'identifiant de propriétaire de NFT et le code biométrique sont chiffrés en utilisant la clé de chiffrement privée du service, et
- stocker le NFT créé dans une chaîne de blocs.

12. Appareil selon la revendication 11, comprenant des moyens pour recevoir, en plus du NFT reçu, un ou plusieurs NFT supplémentaires, où le NFT reçu et les un ou plusieurs NFT supplémentaires comprennent les mêmes identifiants de propriétaires de NFT et les mêmes codes biométriques chiffrés en utilisant la même clé publique de chiffrement commune à l'ensemble d'appareils ; et des moyens pour stocker dans le NFT créé les identifiants de NFT des un ou plusieurs NFT supplémentaires.

13. Procédé d'enregistrement d'un utilisateur à un service comprenant les étapes suivantes
- envoyer, par un appareil, un code aléatoire à un appareil utilisateur,
- recevoir de l'appareil utilisateur le code aléatoire et une clé publique de chiffrement commune à un ensemble d'appareils, dans lequel l'ensemble d'appareils comprend l'appareil utilisateur,
- fournir, par l'appareil, un identifiant d'utilisateur,
- envoyer, par l'appareil, l'identifiant d'utilisateur chiffré en utilisant la clé publique de chiffrement commune à l'ensemble d'appareils, et une clé publique de chiffrement du service,
- recevoir, par l'appareil, un identifiant de jeton non fongible, NFT, un identifiant de propriétaire de NFT, l'identifiant d'utilisateur et un code biométrique qui est une représentation de données biométriques de l'utilisateur, dans lequel l'identifiant de NFT, l'identifiant de propriétaire de NFT, l'identifiant d'utilisateur et le code biométrique sont chiffrés en utilisant la clé publique du service,
- créer, par l'appareil, un NFT en stockant l'identifiant d'utilisateur reçu, l'identifiant de propriétaire de NFT reçu, l'identifiant de NFT reçu et le code biométrique reçu, dans lequel l'identifiant d'utilisateur, l'identifiant de propriétaire de NFT, l'identifiant de NFT et le code biométrique sont chiffrés en utilisant la clé de chiffrement privée du service, et
- stocker le NFT créé dans une chaîne de blocs.

14. Procédé selon la revendication 13, comprenant la réception, par l'appareil, d'un ou plusieurs NFT supplémentaires et le stockage des un ou plusieurs NFT supplémentaires dans le NFT qui est en cours de création.

15. Procédé pour l'authentification d'un appareil utilisateur à un service comprenant les étapes suivantes
- recevoir, par l'appareil utilisateur, un code aléatoire et une clé publique du service,
- obtenir, par l'appareil utilisateur, des données biométriques d'un utilisateur de l'appareil utilisateur,
- convertir, par l'appareil utilisateur, les données biométriques en un code biométrique qui est une représentation numérique des données biométriques obtenues de l'utilisateur,
- rechercher, par l'appareil utilisateur dans une chaîne de blocs, un jeton non fongible, NFT, comportant le code biométrique chiffré en utilisant clé publique de chiffrement commune à un ensemble d'appareils, dans lequel l'ensemble d'appareils comprend l'appareil utilisateur,
- comparer, par l'appareil utilisateur, un identifiant d'appareil stocké dans le NFT jugé comme comportant le code biométrique avec l'identifiant d'appareil de l'appareil utilisateur, et si l'identifiant d'appareil stocké dans le NFT et l'identifiant d'appareil de l'appareil utilisateur sont jugés comme concordants :
o déchiffrer, par l'appareil utilisateur, un identifiant d'utilisateur du NFT en utilisant la clé de chiffrement privée de l'appareil, et
o envoyer, par l'appareil utilisateur, l'identifiant d'utilisateur du NFT chiffré en utilisant la clé publique de chiffrement reçue du service.

16. Programme informatique comprenant un code pour, lorsqu'il est exécuté dans un appareil de traitement de données, amener l'appareil à effectuer un procédé conformément à l'une des revendications 10, et 13 à 15.
